# FASCICULE DE BREVET EUROPEEN

(11) **EP 2 904 696 B1**
(45) Date de publication et mention de la délivrance du brevet: **19.06.2019**
(21) Numéro de dépôt: 13785496.4
(22) Date de dépôt: 27.09.2013
(51) Int. Cl.: H02M 1/08, H02M 3/158

(54) **DISPOSITIF DE SYNCHRONISATION D'AU MOINS DEUX CONVERTISSEURS**
VORRICHTUNG ZUR SYNCHRONISIERUNG VON MINDESTENS ZWEI UMRICHTERN
DEVICE FOR SYNCHRONISING AT LEAST TWO CONVERTERS

(30) Priorité: 02.10.2012 FR 1259318
(43) Date de publication de la demande: 12.08.2015
(73) Titulaire: Technoboost, 75116 Paris (FR)
(72) Inventeur: BOUCLY, Bernard, F-78150 Le Chesnay (FR); LECRUX, Eric, F-78125 La Boissiere Ecole (FR)
(74) Mandataire: Ménès, Catherine
(86) Numéro de dépôt international: PCT/FR2013/052286
(87) Numéro de publication internationale: WO 2014/053750

(56) Documents cités:
- FR-A1- 2 964 515
- US-A- 5 793 191
- US-B2- 7 933 132

## Description

La présente invention concerne de manière générale un dispositif de synchronisation d'au moins deux convertisseurs et plus particulièrement un dispositif de synchronisation d'au moins deux convertisseurs courant continu/courant continu (DC/DC) abaisseur de tension ou élévateur de tension à fréquence variable pour un véhicule.

Les convertisseurs multi-phases entrelacés existant en milieu automobile travaillent à fréquence fixe (par exemple 150kHz pour chaque phase). Toutefois, des émissions conduites et rayonnées sont présentes sur un spectre étroit en radiofréquence et des filtres sont nécessaires pour respecter les normes EMI exigées pour les composants d'un véhicule.

En outre, les convertisseurs travaillant à une fréquence fixe ne gardent pas une stabilité de la régulation pour un rapport cyclique supérieur à 50% et ceci limite la puissance de sortie des convertisseurs.

De plus, ces convertisseurs entrelacés à fréquence fixe, par leur principe, nécessitent d'avoir un rapport cyclique de commande minimale (par exemple 1%) pour garder une stabilité de l'asservissement de la tension de sortie. Ce principe implique donc de consommer a minima un courant de charge de quelques ampères, ce qui implique un mauvais rendement.

Les convertisseurs à fréquence variable sont difficilement entrelacés. Le fonctionnement synchronisé de plusieurs convertisseurs opérant à des fréquences différentes est difficile à mettre en oeuvre car il requiert des systèmes complexes particulièrement lorsqu'une synchronisation est nécessaire sur une plage étendue de fréquence. Le synchronisme nécessite souvent un dispositif numérique pour calculer à chaque période l'instant précis de synchronisme pour chaque convertisseur. En général la plage de fonctionnement en fréquence est très limitée.

De surcroît, le dispositif de synchronisme génère en général l'arrêt total de tous les convertisseurs lors d'une panne de celui-ci.

Le document US7933132 décrit un système comprenant une pluralité de convertisseurs à fréquence variable, un circuit de synchronisation associé à chaque convertisseur pour synchroniser le fonctionnement de chaque convertisseur à la même fréquence et un dispositif de commande pour synchroniser le fonctionnement des circuits de synchronisation.

Un but de la présente invention est de répondre aux inconvénients mentionnés ci-dessus et en particulier, de proposer un dispositif de synchronisation permettant d'entrelacer et synchroniser le fonctionnement d'au moins deux convertisseurs courant continu/courant continu abaisseur de tension ou élévateur de tension à fréquence variable, sur toute la plage de fréquence de fonctionnement des convertisseurs.

Pour cela un premier aspect de l'invention concerne un dispositif de synchronisation d'au moins deux convertisseurs courant continu/courant continu caractérisé en ce qu'il comprend :
- des moyens de réception pour recevoir un signal de commutation généré par chacun des convertisseurs ;
- des moyens pour détecter un type de transition des signaux de commutation reçus ;
- des moyens pour générer un signal de synchronisation lorsqu'une transition est détectée ; et
- des moyens pour fournir le signal de synchronisation à l'un des convertisseurs, lesdits moyens étant configurés pour fournir le signal de synchronisation à un convertisseur différent et dans un ordre successif chaque fois qu'une transition est détectée.

Un tel dispositif de synchronisation permet de synchroniser le fonctionnement d'une pluralité de convertisseurs courant continu/courant continu à fréquence variable sur toute la plage de fréquence de fonctionnement des convertisseurs. Des convertisseurs abaisseurs de tension ou élévateurs de tension peuvent fonctionner avec entrelacement quelle que soit la fréquence de travail des convertisseurs (par exemple, dans une plage de 4kHz à 40kHz). De plus, une panne de fonctionnement de la synchronisation n'entraîne pas l'arrêt forcé de tous les convertisseurs. En outre, il permet de réduire le courant d'ondulation dans la capacité de filtrage.

De manière très avantageuse, il comprend en outre des moyens de démarrage de synchronisation aptes à fournir un signal de synchronisation à un convertisseur prédéterminé.

Une réalisation particulièrement intéressante consiste en ce que les moyens de démarrage de synchronisation incluent des moyens pour recevoir une valeur d'un courant traversant une inductance d'un convertisseur parmi les convertisseurs et des moyens pour générer un signal de démarrage lorsque la valeur dudit courant atteint une valeur prédéterminée. Ceci permet un bon démarrage de la synchronisation.

De manière avantageuse, les moyens de démarrage de synchronisation incluent des moyens pour recevoir une tension représentative d'un courant traversant une inductance d'un convertisseur parmi les convertisseurs et des moyens pour générer un signal de démarrage lorsque la valeur dudit courant atteint une valeur prédéterminée.

De manière avantageuse, les moyens de réception incluent un circuit différentiateur pour traiter le signal de commutation reçu de chacun des convertisseurs.

De manière très avantageuse, les moyens de réception incluent un circuit de mise en forme pour traiter le signal de commutation reçu de chacun des convertisseurs.

De manière très avantageuse, les moyens pour détecter un type de transition des signaux de commutation incluent un circuit OU.

De manière très avantageuse, les moyens pour générer un signal de synchronisation lorsqu'une transition est détectée incluent une bascule D.

Dans une réalisation particulièrement intéressante, les convertisseurs sont des convertisseurs à fréquence variable.

Selon un deuxième aspect, la présente l'invention concerne un système comprenant un dispositif de synchronisation tel que défini ci-dessus, au moins deux convertisseurs entrelacés élévateurs de tension ou au moins deux convertisseurs entrelacés abaisseurs de tension, et un additionneur associé à chacun de convertisseurs pour additionner le signal de synchronisation à un signal de régulation fourni au convertisseur.

Selon un troisième aspect, la présente l'invention concerne un véhicule automobile comprenant un dispositif de synchronisation tel que défini ci-dessus ou un système tel que défini ci-dessus.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la Figure 1 illustre un système incluant un dispositif de synchronisation et deux convertisseurs abaisseurs de tension selon la présente invention ;
- la Figure 2 illustre un dispositif de synchronisation selon la présente invention ;
- la Figure 3 illustre un exemple de réalisation d'un système incluant un dispositif de synchronisation et deux convertisseurs abaisseurs de tension selon la présente invention ;
- la Figure 4 illustre l'évolution synchronisée du courant traversant l'inductance de chaque convertisseur abaisseur de tension pour le système illustré dans la Figure 1 ;
- la Figure 5 illustre le courant efficace dans un condensateur de sortie du système illustré dans la Figure 1 ;
- la Figure 6 illustre l'effet d'une panne de la synchronisation des convertisseurs courant continu/courant continu abaisseur de tension ;
- la Figure 7 illustre l'effet d'une panne de la synchronisation des convertisseurs durant 2ms ;
- la Figure 8 illustre un système incluant un dispositif de synchronisation et deux convertisseurs élévateurs de tension selon la présente invention ;
- la Figure 9 illustre un exemple de réalisation un système incluant un dispositif de synchronisation et deux convertisseurs élévateurs de tension selon la présente invention ;
- la Figure 10 illustre l'évolution synchronisée du courant traversant l'inductance de chaque convertisseur abaisseur de tension pour le système illustré dans la Figure 8 ;
- la Figure 11 illustre le courant efficace dans un condensateur de sortie du système illustré dans la Figure 8 ;
- la Figure 12 illustre les signaux de l'hystérésis, les valeurs des sorties Q et Qbarre, la valeur de l'inductance L1, la valeur de l'inductance L2 et les courants dans les inductances L1, L2 lorsque la valeur de l'inductance L1 est égale à la valeur de l'inductance L2 ;
- les Figures 13 et 14 illustrent qu'une déviation de composant inductif de +50% (self de commutation) n'entraîne pas l'arrêt du synchronisme ; et
- les Figures 15 et 16 illustrent qu'une déviation de composant inductif de -50% n'entraîne pas l'arrêt du synchronisme.

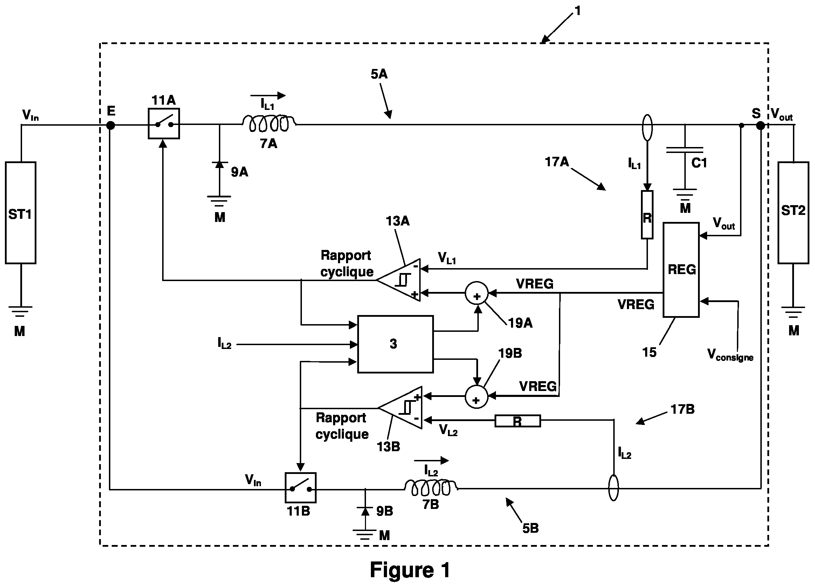

La Figure 1 illustre un système 1 incluant un dispositif de synchronisation 3 et deux convertisseurs abaisseurs de tension 5A, 5B à fréquence variable selon la présente invention. Chaque convertisseur 5 est régulé en mode courant.

Chaque convertisseur 5 comprend une inductance 7, une diode 9, un commutateur 11, un générateur 13, par exemple un comparateur à hystérésis, pour produire un signal de commutation pour piloter le commutateur 11 afin de générer un courant traversant l'inductance 7 et un régulateur 15 pour fournir à une entrée non-inverseuse du comparateur à hystérésis une tension de régulation VREG du courant traversant l'inductance 7.

Dans le mode de réalisation illustré dans la Figure 1, il y a un seul régulateur 15 et les convertisseurs 5A, 5B partagent le même régulateur 15.

Chaque convertisseur 5A, 5B inclut des moyens 17 pour fournir une tension V_{L1} et une tension V_{L2} (une image du courant I_{L1} et I_{L2}) représentative du courant I_{L1} et I_{L2} traversant respectivement l'inductance 7A et l'inductance 7B à une entrée inverseuse du comparateur à hystérésis 13A et à une entrée inverseuse du comparateur à hystérésis 13B respectivement. Les moyens 17 comprennent une résistance R pour convertir un échantillonnage du courant I_{L1},I_{L2} traversant l'inductance 7A,7B en une tension V_{L1},V_{L2}.

Le système 1 comprend en outre un condensateur de filtrage C1.

Comme illustré sur la Figure 1, les convertisseurs 5A,5B sont reliés à un premier stockeur d'énergie électrique ST1 par l'intermédiaire d'une borne d'entrée E et à un deuxième stockeur d'énergie électrique ST2 par l'intermédiaire d'une borne de sortie S. Les stockeurs d'énergie électrique ST1 et ST2 sont reliés à une masse M. Le premier stockeur d'énergie électrique ST1 est, par exemple, une batterie telle qu'une batterie électrochimique et le deuxième stockeur d'énergie électrique ST2 est, par exemple, un supercondensateur ou une batterie ou charges.

Chaque commutateur 11A, 11B est relié électriquement d'un côté à la borne d'entrée E et de l'autre côté en série avec l'inductance 7A, 7B qui est reliée de l'autre côté à la borne de sortie S. Chaque diode 9A, 9B est reliée électriquement du côté cathode entre le commutateur et l'inductance et chaque diode 9A, 9B est reliée électriquement du côté anode à la masse M. Le comparateur à hystérésis 13A est relié électriquement au commutateur 11A afin de transmettre un signal de commutation permettant la fermeture et l'ouverture du commutateur 11A pour générer un courant dans l'inductance 7A. Le comparateur à hystérésis 13B est relié électriquement au commutateur 11B afin de transmettre un signal de commutation permettant la fermeture et l'ouverture du commutateur 11B pour générer un courant dans l'inductance 7B.

Le comparateur à hystérésis 13A reçoit à son entrée inverseuse la tension V_{L1} représentative du courant I_{L1} traversant l'inductance 7A et à son entrée non-inverseuse une tension de régulation VREG fournie par le régulateur 15. Le comparateur à hystérésis 13B reçoit à son entrée inverseuse la tension V_{L2} représentative du courant I_{L2} traversant l'inductance 7B et à son entrée non-inverseuse la tension de régulation VREG fournie par le régulateur 15.

Le régulateur 15 est apte à recevoir un signal de rétroaction en tension d'une tension de sortie Vout du convertisseur (feedback), et un signal de consigne V_{consigne}. Le régulateur 15 est apte à déterminer une valeur de tension de régulation VREG à partir de la valeur de la tension de sortie Vout, et de la valeur du signal de consigne V_{consigne}. La tension de régulation VREG est fournie simultanément au comparateur à hystérésis 13A et au comparateur à hystérésis 13B et le courant traversant les inductances 7A, 7B est régulé à la valeur de la tension de régulation VREG.

Le condensateur de filtrage C1 est raccordé électriquement d'un côté entre l'inductance 7A du condensateur 5A et la borne de sortie S et de l'autre côté à la masse M.

Le système bi-phase 1 comprend en outre un additionneur 19A, 19B associé à chaque convertisseur 5A, 5B. Chaque additionneur 19A, 19B est apte à additionner un signal de synchronisation fourni par le dispositif de synchronisation 3 à la valeur de la tension de régulation VREG fournie par le régulateur 15. L'additionneur 19A est apte à fournir le résultat à l'entrée non-inverseuse du comparateur à hystérésis 13A et l'additionneur 19B est apte à fournir le résultat à l'entrée non-inverseuse du comparateur à hystérésis 13B.

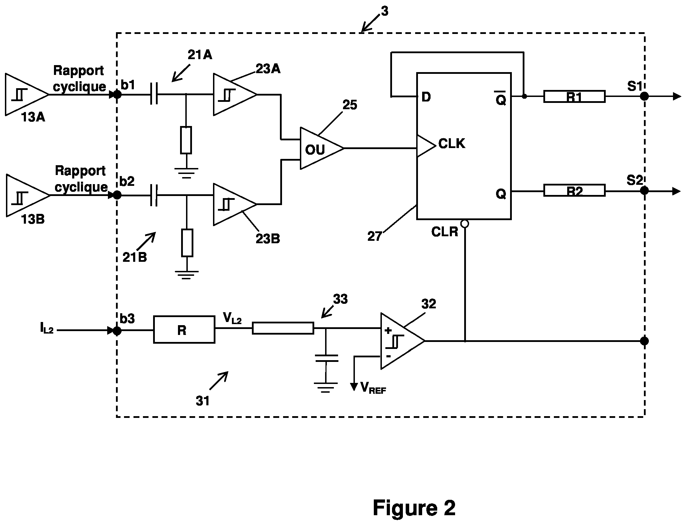

Le dispositif de synchronisation 3 selon la présente invention est illustré en détails sur la Figure 2.

Le dispositif de synchronisation 3 est apte à recevoir le signal de commutation issu du comparateur à hystérésis 13A à une première borne d'entrée b1 et à recevoir le signal de commutation issu du comparateur à hystérésis 13B à une deuxième borne d'entrée b2.

Le dispositif de synchronisation 3 comprend des moyens de réception pour recevoir le signal de commutation généré par chacun des convertisseurs. Les moyens de réception incluent un circuit différentiateur 21A et un circuit de mise en forme 23A pour recevoir et traiter le signal de commutation fourni par le comparateur à hystérésis 13A, et un circuit différentiateur 21B et un circuit de mise en forme 23B pour recevoir et traiter le signal de commutation fourni par le comparateur à hystérésis 13B.

Le dispositif de synchronisation 3 comprend en outre des moyens pour détecter un type de transition des signaux de commutation reçus. Les moyens pour détecter un type de transition incluent un circuit OU 25.

Le circuit différentiateur 21A est relié d'un côté à la première borne b1 et de l'autre côté au circuit de mise en forme 23A. Le circuit de mise en forme 23A est aussi relié à une entrée du circuit OU. Le circuit différentiateur 21B est relié d'un côté à la première borne b2 et de l'autre côté au circuit de mise en forme 23B. Le circuit de mise en forme 23B est relié à l'autre entrée du circuit OU.

Le dispositif de synchronisation 3 comprend en outre des moyens pour générer un signal de synchronisation lorsqu'une transition est détectée et des moyens pour fournir le signal de synchronisation à l'un des convertisseurs 5A, 5B.

Les moyens pour générer un signal de synchronisation lorsqu'une transition est détectée incluent une bascule D 27.

La sortie du circuit OU est reliée à une entrée horloge CLK de la bascule D. Une sortie Q de la bascule D est reliée à une résistance R2 (par exemple, de 200kΩ) et la sortie complémentée de Q (Qbarre) de la bascule D est relié à une résistance R1 (par exemple, de 200kΩ). L'autre entrée D de la bascule D est reliée à la sortie complémentée de Q (Qbarre) et à la résistance R1.

La résistance R1 est aussi reliée à une première borne de sortie S1 et la résistance R2 est reliée à une deuxième borne de sortie S2 du dispositif 3.

La bascule D est apte à générer alternativement un signal de synchronisation à la sortie Q et un signal de synchronisation à la sortie complémentée de Q (Qbarre) chaque fois que l'entrée horloge CLK reçoit un signal actif du circuit OU.

Les moyens pour fournir le signal de synchronisation à l'un des convertisseurs 5A, 5B comprend la bascule D, la résistance R1 reliée à la première borne de sortie S1 et la résistance R2 reliée à la deuxième borne de sortie S2.

Le dispositif de synchronisation 3 reçoit en entrée les signaux de commutations sorties de chaque convertisseur 5A, 5B. Les signaux de commutations sont des signaux modulés en largeur d'impulsions (PWM) et l'intensité du courant générée dans les inductances 7A, 7B est déterminée par le rapport cyclique de ces signaux.

Chaque transition du signal de commutation en sortie du comparateur 13A est traitée par le circuit différenciateur 21A et le circuit de mise en forme 23A et fournie à l'entrée du circuit OU. Chaque transition du signal de commutation en sortie du comparateur 13B est traitée par le circuit différenciateur 21B et le circuit de mise en forme 23B et fournie à l'autre entrée du circuit OU.

Seules les transitions positives sont prises en compte par le circuit OU 25 et sont fournies à l'entrée horloge CLK de la bascule D. La bascule D alterne les états de sortie Q et Qbarre à chaque transition positive sur son entrée horloge CLK reçue du circuit OU. Un signal de synchronisation (par exemple, un signal de +5V) est produit alternativement à ces sorties Q et Qbarre. Un signal de synchronisation est ainsi fourni à un convertisseur différent (par l'intermédiaire des résistances R1, R2) et dans un ordre successif (par exemple, 5A, 5B, 5A, 5B...) chaque fois qu'une transition positive est détectée par le circuit OU (dans le cas où le système comprendrait trois convertisseurs 5A, 5B et 5C, l'ordre sera par exemple, 5A, 5B, 5C, 5A, 5B, 5C...).

Le signal de synchronisation est fourni à l'additionneur 19A ou l'additionneur 19B à travers la résistance R1 ou R2. L'additionneur 19A ou 19B additionne la valeur de la tension de régulation VREG au signal de synchronisation (par exemple, une tension de +290mV). Le résultat est fourni à l'entrée non-inverseuse du comparateur à hystérésis pour modifier l'amplitude de l'hystérésis du comparateur.

Une tension de 0V est fournie à l'autre additionneur et le comparateur à hystérésis relié à l'autre additionneur ne reçoit que la valeur de la tension de régulation VREG à son entrée non-inverseuse.

La fourniture alternative du signal de synchronisation à l'additionneur 19A et l'additionneur 19B pour modifier l'amplitude de l'hystérésis du comparateur lorsqu'une transition positive est détectée par le circuit OU permet de synchroniser le fonctionnement des convertisseurs 5A et 5B.

Le dispositif de synchronisation 3 comprend en outre un dispositif de démarrage de synchronisation 31 apte à fournir un signal de synchronisation à un convertisseur prédéterminé.

Le dispositif de démarrage de synchronisation 31 comprend un comparateur 32, un convertisseur linéaire courant / tension de gain R et un circuit de mise en forme 33 apte à empêcher un démarrage de synchronisation simultané des deux convertisseurs 5A, 5B relié d'un côté à l'entrée non-inverseuse du comparateur 32 et de l'autre coté à une borne d'entrée b3 par l'intermédiaire du convertisseur linéaire courant / tension de gain R. Le dispositif 31 comprend en outre une source de tension de référence VREF (par exemple, une tension égale à 10% de VREG) reliée à l'entrée inverseuse du comparateur 32. La sortie du comparateur 32 est reliée à une entrée de réinitialisation CLR de la bascule D.

Le dispositif 31 assure le bon démarrage de la synchronisation. La borne d'entrée b3 reçoit la valeur du courant I_{L1} ou I_{L2} (une image du courant I_{L1} ou I_{L2}) traversant respectivement l'inductance 7A ou l'inductance 7B lors d'une mise en alimentation d'un convertisseur 5A ou 5B ou du système 1.

Le comparateur 32 compare la valeur de la tension V_{L1} ou V_{L2} à la valeur de la tension de référence V_{REF}. Sur une valeur haute du courant I_{L1} ou I_{L2}, le comparateur 32 génère une impulsion de réinitialisation et fournit ce signal de démarrage à la bascule D. La bascule D est apte à fournir un signal de synchronisation à une borne prédéterminée, par exemple, S1 lorsqu'elle reçoit l'impulsion de réinitialisation. Ainsi la sortie S1 du dispositif de synchronisation 3 s'initialise à une tension positive (par exemple, + 290mV) et la sortie S2 s'initialise à une tension nulle.

Ensuite, comme indiqué ci-dessus, le dispositif 3 fournira un signal de synchronisation à la sortie S2 lorsqu'une transition positive est détectée par le circuit OU (et ensuite à la sortie S1, S2, S1, S2...).

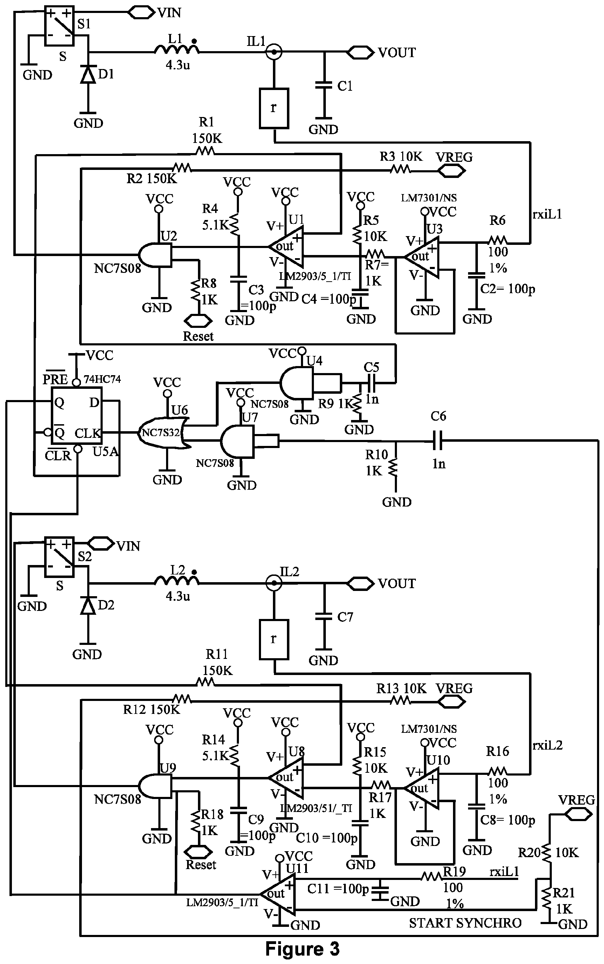

La Figure 3 illustre un exemple de réalisation du système 1.

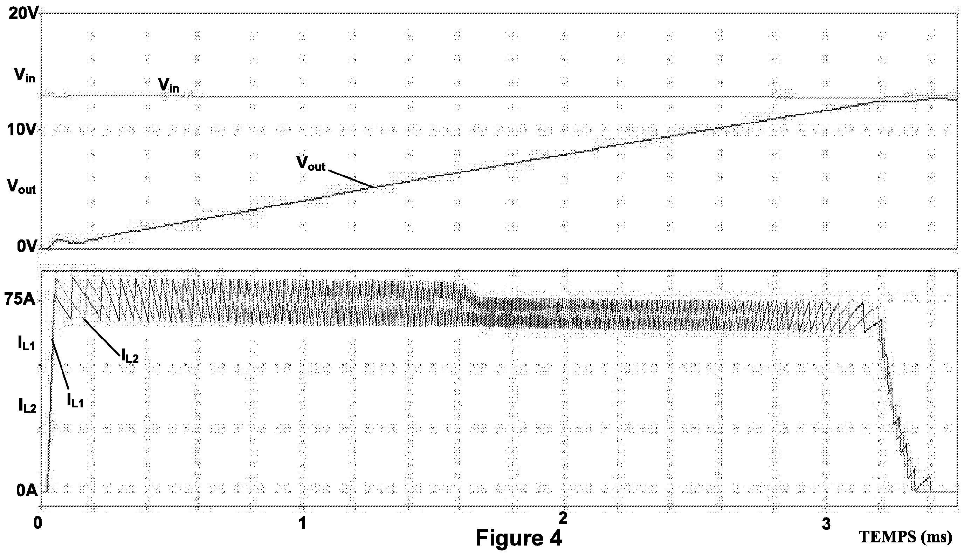

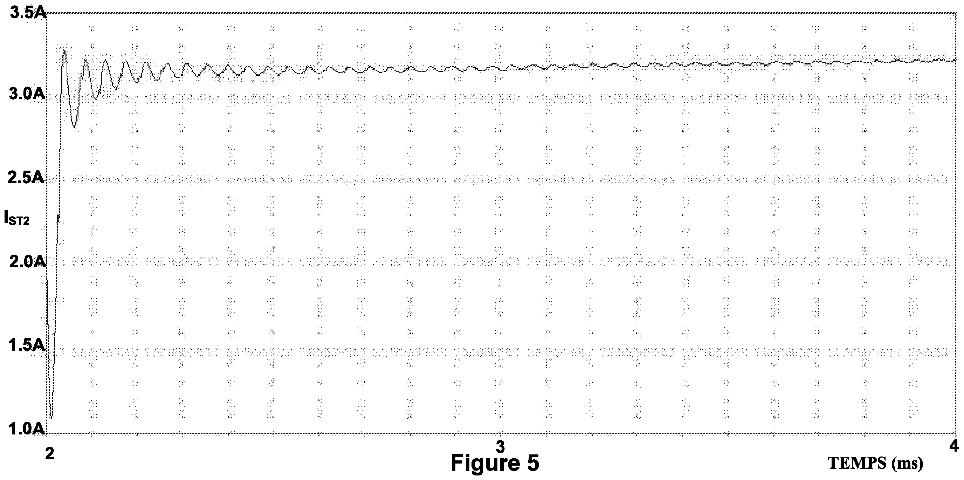

La Figure 4 illustre la valeur du courant I_{L1} traversant l'inductance 7A et la valeur du courant I_{L2} traversant l'inductance 7B. La Figure 4 montre que la génération du courant I_{L1} et I_{L2} est synchronisée et que le système 1 fournit une tension de sortie Vₒᵤₜ stable et charge le stockeur d'énergie ST2 jusqu'à une valeur demandée de 12V. La Figure 5 illustre un courant efficace de 3A dans un condensateur de sortie ST2.

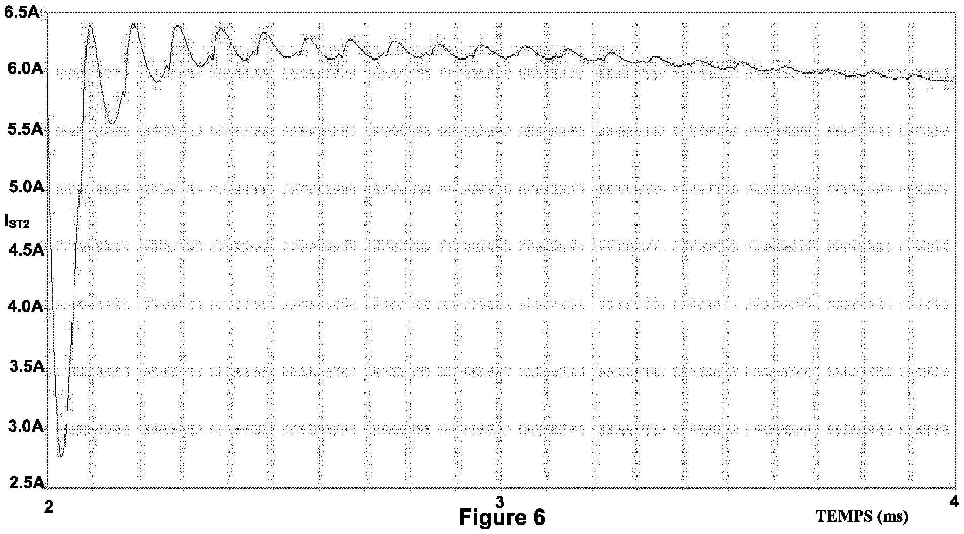

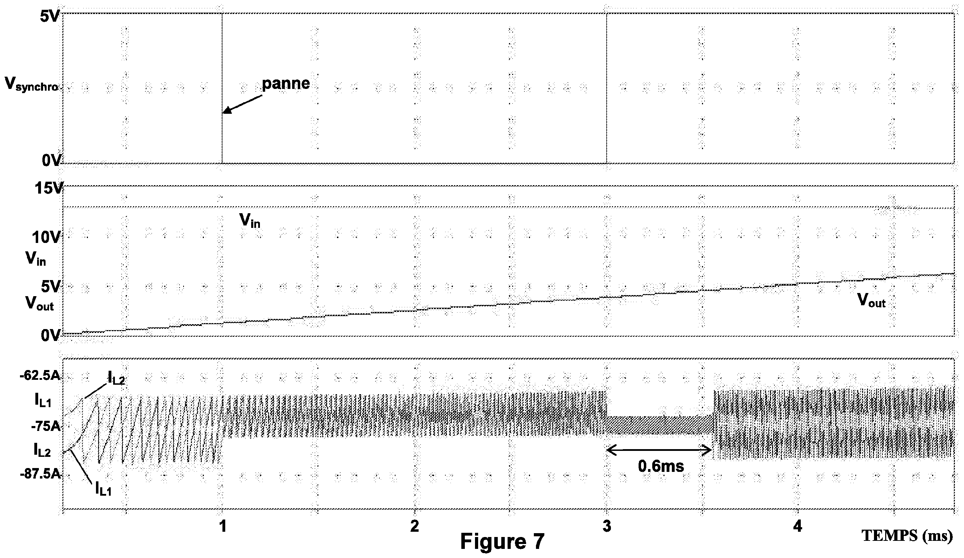

La Figure 6 illustre l'effet d'une panne de la synchronisation des convertisseurs courant continu/courant continu abaisseur de tension. Il n'y a pas d'arrêt total de tous les convertisseurs lors de la panne et le courant efficace dans la capacité de sortie ST2 est doublée (6A). La Figure 7 illustre une panne de synchronisation durant 2ms. Les deux convertisseurs abaisseurs de tension fonctionnent durant la panne sans entrelacement. Après la disparition de la panne, les convertisseurs se synchronisent après un délai (de 0.6ms dans la Figure 7).

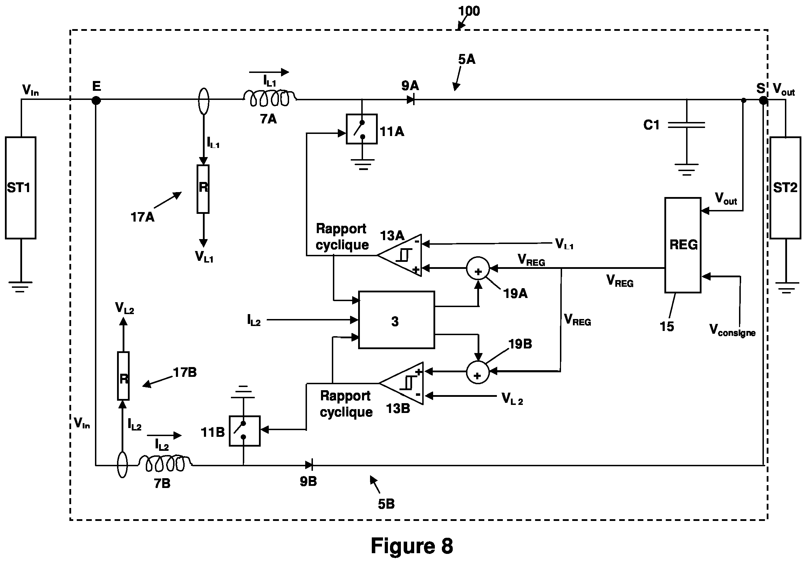

La présente invention s'applique également à un système 100 incluant un dispositif de synchronisation 3 et des convertisseurs courant continu/courant continu élévateur de tension tel qu'illustré dans la Figure 8. Le dispositif de synchronisation est identique au dispositif de synchronisation illustré dans la Figure 2 et décrit ci-dessus.

Le convertisseur courant continu/courant continu élévateur de tension diffère du convertisseur abaisseur de tension (tel qu'illustré dans la Figure 1) en ce que l'inductance 7A, 7B est relié électriquement d'un côté à la borne d'entrée E et de l'autre côté en série avec le côté anode de la diode 9A, 9B. Le côté cathode de la diode 9A, 9B est relié à la borne de sortie S. Le commutateur 11A, 11B est relié électriquement d'un côté entre la diode 9A, 9B et l'inductance 7A, 7B et de l'autre côté à la masse M.

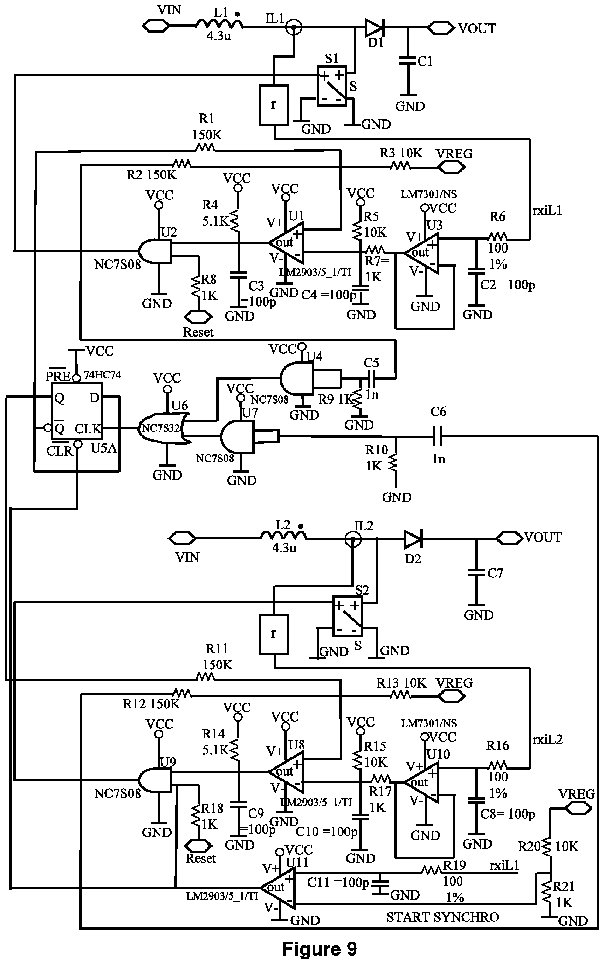

La Figure 9 illustre un exemple de réalisation du système 100 incluant le dispositif de synchronisation 3 et des convertisseurs courant continu/courant continu élévateur de tension.

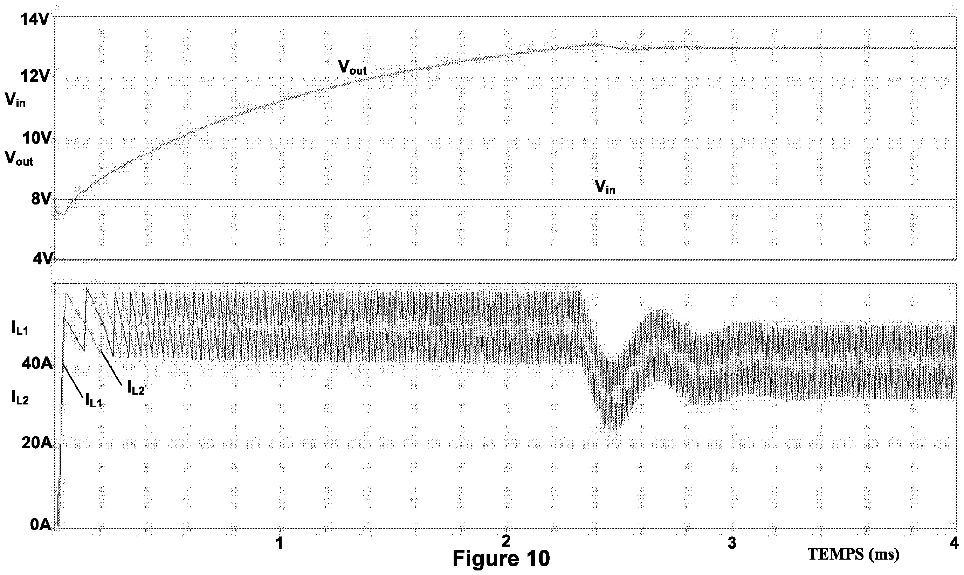

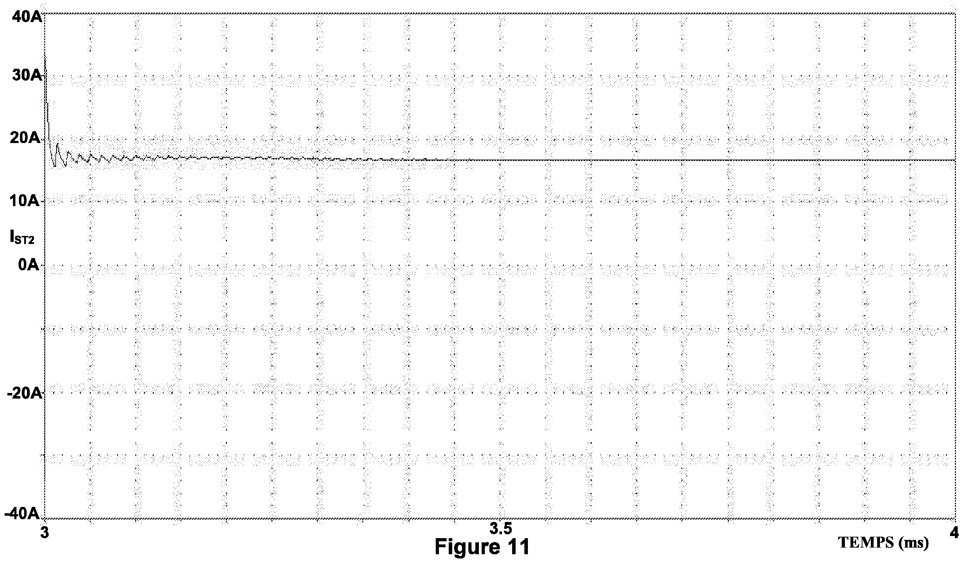

La Figure 10 illustre la valeur du courant I_{L1} traversant l'inductance 7A et la valeur du courant I_{L2} traversant l'inductance 7B. La Figure 10 montre que la génération du courant I_{L1} et I_{L2} est synchronisée et que le système 100 fournit une tension de sortie Vₒᵤₜ stable jusqu'à la valeur demandée de 13V. La Figure 11 illustre le courant efficace dans le condensateur de sortie ST2.

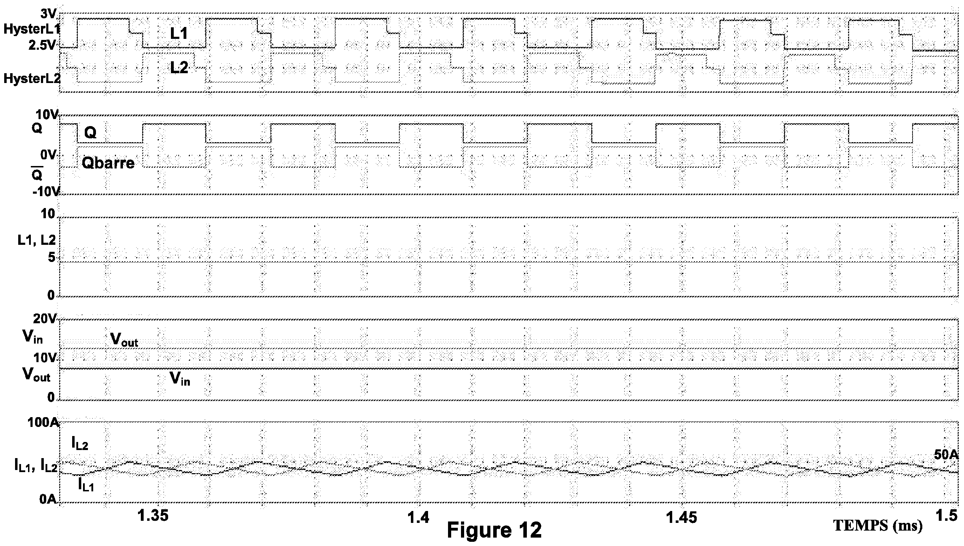

La Figure 12 illustre les signaux de l'hystérésis, les valeurs des sorties Q et Qbarre, la valeur de l'inductance L1, la valeur de l'inductance L2 et les courants dans les inductances L1, L2 lorsque la valeur de l'inductance L1 est égale à la valeur de l'inductance L2.

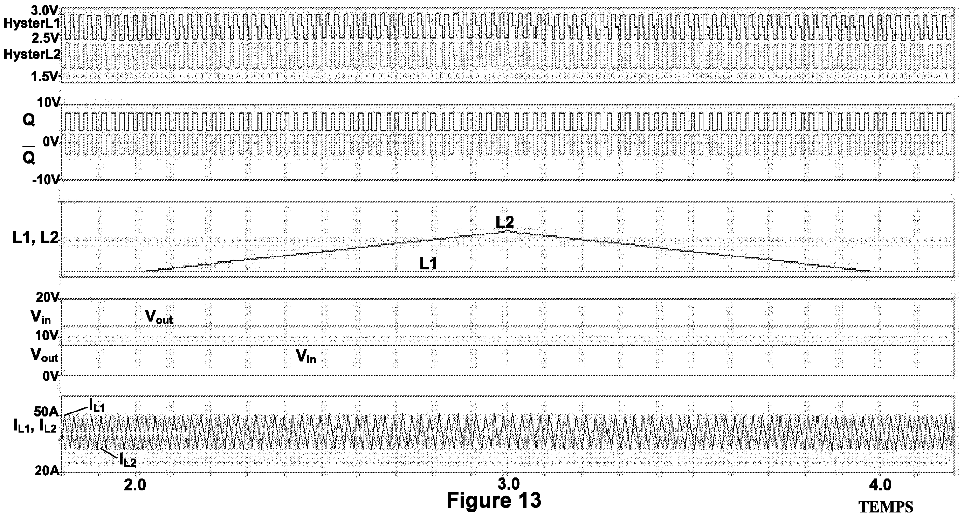

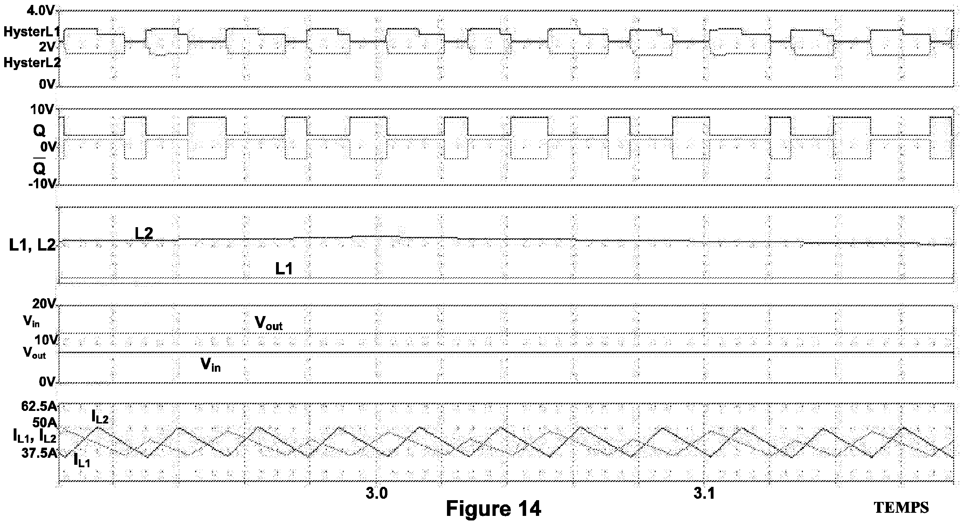

Les Figures 13 et 14 illustrent les signaux de l'hystérésis, les valeurs des sorties Q et Qbarre, la valeur de l'inductance L1, la valeur de l'inductance L2 et les courants dans les inductances L1, L2 lors d'une déviation de l'inductance L1 vers l'inductance L2 (L2=150%L1). Ces Figures montrent qu'une déviation de composant inductif de +50% (self de commutation) n'entraîne pas l'arrêt du synchronisme.

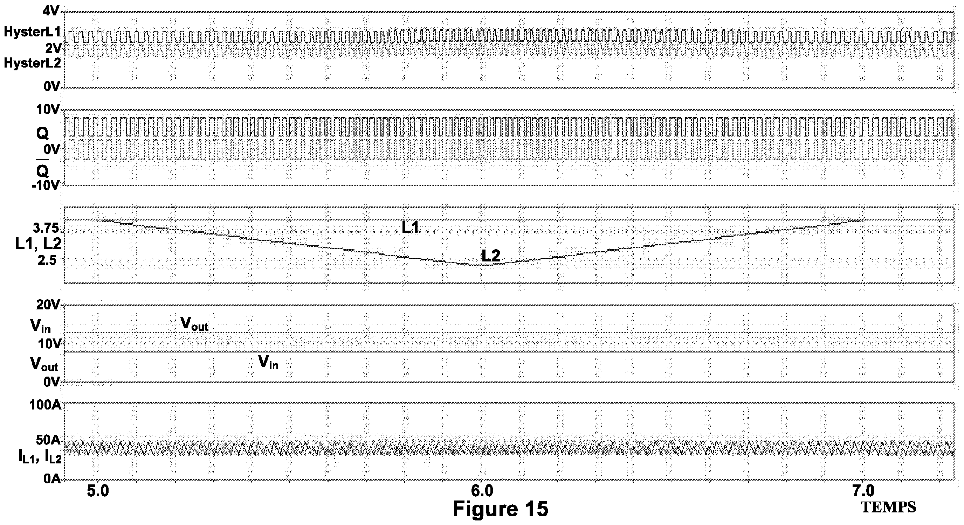

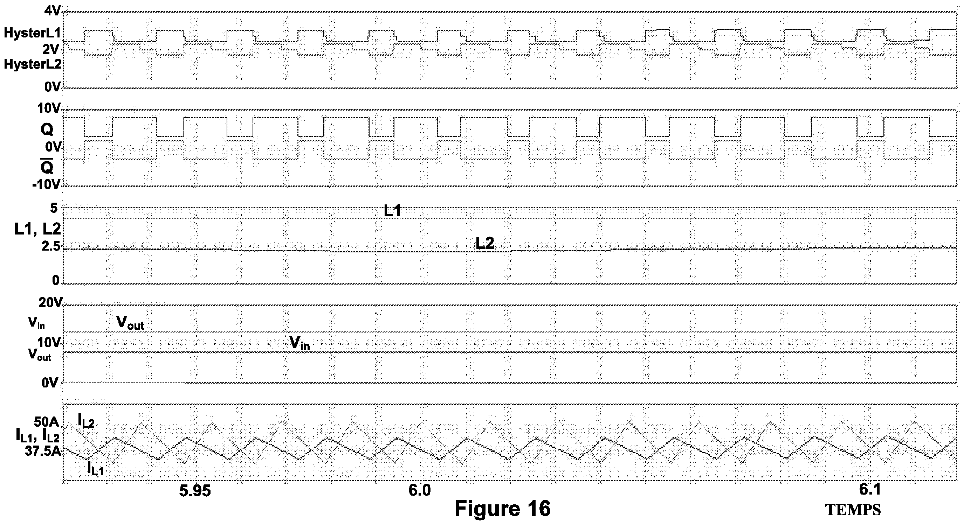

Les Figures 15 et 16 illustrent les signaux de l'hystérésis, les valeurs des sorties Q et Qbarre, la valeur de l'inductance L1, la valeur de l'inductance L2 et les courants dans les inductances L1, L2 lors d'une déviation de l'inductance L1 vers l'inductance L2 (L2=-150%L1). Ces Figures montrent qu'une déviation de composant inductif de -50% n'entraîne pas l'arrêt du synchronisme.

La présente invention fournit ainsi un dispositif de synchronisation permettant de synchroniser le fonctionnement d'une pluralité de convertisseurs courant continu/courant continu à fréquence variable sur toute la plage de fréquence de fonctionnement des convertisseurs. Des convertisseurs abaisseurs de tension ou élévateurs de tension peuvent fonctionner avec entrelacement quelle que soit la fréquence de travail des convertisseurs (par exemple, dans une plage de 4kHz a 40kHz). De plus, une panne de fonctionnement de la synchronisation n'entraîne pas l'arrêt forcé de tous les convertisseurs. Ils travaillent alors sur leur propre fréquence respective. En outre, une dérive forte de composant inductif (+/-50%) (self de commutation) n'entraîne pas l'arrêt du synchronisme. Ainsi, il n'est pas utile de réaliser des calculs numériques pour la synchronisation en corrigeant les dérives de composants des convertisseurs. De surcroît, la présente invention permet de réduire le courant d'ondulation dans la capacité de filtrage.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

Par exemple, chaque convertisseur peut être régulé en mode courant et en mode tension. De plus, le système peut comprendre plus de deux convertisseurs et le dispositif de synchronisation peut synchroniser plus de deux convertisseurs.

## Revendications

1. Dispositif de synchronisation (3) d'au moins deux convertisseurs (5A, 5B) à fréquence variable, courant continu/courant continu, le dispositif de synchronisation comprenant:
• des moyens de réception (21A, 21B, 23A, 23B) pour recevoir un signal de commutation généré par chacun des convertisseurs ;
• des moyens (25) pour détecter un type de transition des signaux de commutation reçus incluant un circuit OU;
• des moyens (27) pour générer un signal de synchronisation lorsqu'une transition est détectée ; et
• des moyens (27, S1, S2) pour fournir le signal de synchronisation à l'un des convertisseurs (5A, 5B), **caractérisé par le fait que** lesdits moyens (27, S1, S2) sont configurés pour fournir le signal de synchronisation à un convertisseur (5A, 5B) différent et dans un ordre successif chaque fois qu'une transition positive est détectée.

2. Dispositif (3) selon la revendication 1, **caractérisé en ce qu'**il comprend en outre des moyens de démarrage de synchronisation (31) aptes à fournir un signal de synchronisation à un convertisseur prédéterminé (5A, 5B).

3. Dispositif (3) selon la revendication précédente **caractérisé en ce que** les moyens de démarrage de synchronisation incluent des moyens pour recevoir une valeur d'un courant traversant une inductance (7A,7B) d'un convertisseur parmi les convertisseurs (5A,5B) et des moyens (32, 27) pour générer un signal de démarrage lorsque la valeur dudit courant atteint une valeur prédéterminée.

4. Dispositif (3) selon l'une quelconque des revendications précédentes, **caractérisé en ce que** les moyens de réception incluent un circuit différentiateur (21A, 21B) pour traiter le signal de commutation reçu de chacun des convertisseurs (5A, 5B).

5. Dispositif (3) selon l'une quelconque des revendications précédentes, **caractérisé en ce que** les moyens de réception incluent un circuit de mise en forme (23A, 23B) pour traiter le signal de commutation reçu de chacun des convertisseurs (5A, 5B).

6. Dispositif (3) selon l'une quelconque des revendications précédentes, **caractérisé en ce que** les moyens pour générer un signal de synchronisation lorsqu'une transition est détectée incluent une bascule D (27).

7. Système (1 ;100) comprenant le dispositif (3) selon l'une quelconque des revendications 1 à 6, au moins deux convertisseurs entrelacés élévateurs de tension (5A,5B) ou au moins deux convertisseurs entrelacés abaisseurs de tension (5A,5B), et un additionneur (19A, 19B) associé à chacun de convertisseurs (5A,5B) pour additionner le signal de synchronisation à un signal de régulation fourni au convertisseur (5A,5B).

8. Véhicule automobile comprenant le dispositif (3) selon l'une quelconque des revendications 1 à 6, ou le système selon la revendication précédente.

## Patentansprüche

1. Vorrichtung (3) zur Synchronisation von mindestens zwei Gleichstrom/Gleichstrom-Wandlern (5A, 5B) mit einstellbarer Frequenz, wobei die Synchronisationsvorrichtung Folgendes umfasst:
• Empfangsmittel (21A, 21B, 23A, 23B) zum Empfangen eines Schaltsignals, das von jedem der Wandler erzeugt wird;
• Mittel (25) zum Erkennen eines Übergangstyps der empfangenen Schaltsignale, enthaltend eine ODER-Schaltung;
• Mittel (27) zum Erzeugen eines Synchronisationssignals, wenn ein Übergang erkannt wird; und
• Mittel (27, S1, S2) zum Bereitstellen des Synchronisationssignals für einen der Wandler (5A, 5B), **dadurch gekennzeichnet, dass** die Mittel (27, S1, S2) dafür ausgelegt sind, das Synchronisationssignal jedes Mal, wenn ein positiver Übergang erkannt wird, einem anderen Wandler (5A, 5B) und in einer aufeinanderfolgenden Reihenfolge bereitzustellen.

2. Vorrichtung (3) nach Anspruch 1, **dadurch gekennzeichnet, dass** sie des Weiteren Synchronisationsstartmittel (31) umfasst, die dazu geeignet sind, einem vorbestimmten Wandler (5A, 5B) ein Synchronisationssignal bereitzustellen.

3. Vorrichtung (3) nach dem vorstehenden Anspruch, **dadurch gekennzeichnet, dass** die Synchronisationsstartmittel Mittel zum Empfangen eines Wertes eines Stroms, der durch eine Spule (7A, 7B) eines Wandlers von den Wandlern (5A, 5B) fließt, und Mittel (32, 27) zum Erzeugen eines Startsignals enthalten, wenn der Wert des Stroms einen vorbestimmten Wert erreicht.

4. Vorrichtung (3) nach einem der vorstehenden Ansprüche, **dadurch gekennzeichnet, dass** die Empfangsmittel eine Differenzierschaltung (21A, 21B) zum Verarbeiten des Schaltsignals enthalten, das von jedem der Wandler (5A, 5B) empfangen wird.

5. Vorrichtung (3) nach einem der vorstehenden Ansprüche, **dadurch gekennzeichnet, dass** die Empfangsmittel eine Impulsformerschaltung (23A, 23B) zum Verarbeiten des Schaltsignals enthalten, das von jedem der Wandler (5A, 5B) empfangen wird.

6. Vorrichtung (3) nach einem der vorstehenden Ansprüche, **dadurch gekennzeichnet, dass** die Mittel zum Erzeugen eines Synchronisationssignals, wenn ein Übergang erkannt wird, eine bistabile Kippstufe D (27) enthalten.

7. System (1; 100), umfassend die Vorrichtung (3) nach einem der Ansprüche 1 bis 6, mindestens zwei verknüpfte Aufwärtswandler (5A, 5B) oder mindestens zwei verknüpfte Abwärtswandler (5A, 5B), und ein Addierglied (19A, 19B), das jedem der Wandler (5A, 5B) zugeordnet ist, um einem Regelsignal, das dem Wandler (5A, 5B) bereitgestellt wird, das Synchronisationssignal hinzuzufügen.

8. Kraftfahrzeug, umfassend die Vorrichtung (3) nach einem der Ansprüche 1 bis 6 oder das System nach dem vorstehenden Anspruch.

## Claims

1. Device for synchronising (3) at least two variable frequency DC/DC converters (5A, 5B), the device for synchronising comprising:
• receiving means (21A, 21B, 23A, 23B) for receiving a switching signal generated by each one of the converters;
• means (25) for detecting a transition type of the received switching signals including an OR circuit;
• means (27) for generating a synchronisation signal when a transition is detected; and
• means (27, S1, S2) for supplying the synchronisation signal to one of the converters (5A, 5B), **characterised by** the fact that said means (27, S1, S2) are configured to supply the synchronisation signal to a different converter (5A, 5B) and in an order of succession each time a positive transition is detected.

2. Device (3) according to claim 1, **characterised in that** it further comprises synchronisation starting means (31) able to supply a synchronisation signal to a predetermined converter (5A, 5B).

3. Device (3) according to the preceding claim **characterised in that** the synchronisation starting means include means for receiving a value of a current passing through an inductance (7A, 7B) of a converter among the converters (5A, 5B) and means (32, 27) for generating a starting signal when the value of said current reaches a predetermined value.

4. Device (3) according to any preceding claims, **characterised in that** the receiving means include a differentiator circuit (21A, 21B) for processing the switching signal received from each one of the converters (5A, 5B).

5. Device (3) according to any preceding claims, **characterised in that** the receiving means include a shaping circuit (23A, 23B) for processing the switching signal received from each one of the converters (5A, 5B).

6. Device (3) according to any preceding claims, **characterised in that** the means for generating a synchronisation signal when a transition is detected include a switch D (27).

7. System (1; 100) comprising the device (3) according to any of claims 1 to 6, at least two interlaced step-up voltage converters (5A, 5B) or at least two interlaced step-down voltage converters (5A, 5B), and an adder (19A, 19B) associated with each one of the converters (5A, 5B) for adding the synchronisation signal to a control signal supplied to the converter (5A, 5B).

8. Motor vehicle comprising the device (3) according to any of claims 1 to 6, or the system according to the preceding claim.
